(19) Europäisches Patentamt
European Patent Office
Office européen des brevets

(11) **EP 4 194 515 A1**

(12) **EUROPEAN PATENT APPLICATION**

(43) Date of publication:
**14.06.2023 Bulletin 2023/24**

(21) Application number: **21212740.1**

(22) Date of filing: **07.12.2021**

(51) International Patent Classification (IPC):
**C09D 5/02** *(2006.01)*   **C09D 7/63** *(2018.01)*
**C09D 7/65** *(2018.01)*   **C09D 11/107** *(2014.01)*
**C09D 133/00** *(2006.01)*

(52) Cooperative Patent Classification (CPC):
**C09D 5/024; C09D 7/63; C09D 7/65; C09D 11/03;
C09D 11/06; C09D 11/08; C09D 11/107;
C09D 11/12; C09D 133/00**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siegwerk Druckfarben AG & Co. KGaA
53721 Siegburg (DE)**

(72) Inventors:
- **Deporte, Claude
  74140 Saint Cergues (FR)**
- **Causse, Melinda
  74800 La Roche sur Foron (FR)**
- **Jung, Frédéric
  74000 Annecy (FR)**
- **Duranton, Valérie
  74930 Pers-Jussy (FR)**

(74) Representative: **Hepp Wenger Ryffel AG
Friedtalweg 5
9500 Wil (CH)**

(54) **BARRIER COATING FOR PAPER SUBSTRATES**

(57)    The present invention is related to a composition for preparing a barrier coating, comprising a binder component comprising a non-cross-linked soft resin and a cross-linked soft resin, shellac, a wetting agent selected from the group consisting of a fatty acid and a fatty acid ester, water, and optional additives. The present invention is furthermore related to a coated article, preferably flexible packaging, comprising a barrier coating made from said composition, and to a method for applying said composition.

**Description**

The present invention is related to a barrier coating for a paper substrate that may be recyclable and compostable.

There is an increasing demand in packaging industry for more ecologically responsible packagings, in the framework of circular economy, and growing demands on recyclable, bio-based, biodegradable and compostable solutions.

A flexible packaging has to possess barrier properties, in order to provide the necessary protection of food in said packaging from the environment. For example, said barrier properties may be obtained by providing a film of a synthetic resin, such as polyethylene (PE), or multi-layer films of two or more synthetic resins, such as coextruded polyethylene/polypropylene ("coex"), in the flexible packaging. For example, a PE film provides for various barrier properties against grease, water, or moisture vapor.

However, a PE film is not recyclable and compostable at all.

In EP-2 470 365 B1, a food packaging film is described that comprises a substrate other than paper, and a barrier coating comprising a water vapor-impermeable, organic-origin, food compatible film forming material. Said barrier coating is characterized by a large amount of shellac (normally at least about 50 wt.% shellac based on the combined weight of the protective coating, i.e., excluding any liquid carrier used to apply the coating).

Shellac coatings have been used for many years as food preservatives. For example, apples and other fruits, both whole and in sections, are commonly coated with shellac to prevent degradation from moisture and atmospheric oxygen.

However, shellac is very expensive. A barrier coating comprising such a high amount of shellac as described in EP-2 470 365 B1 is thus economically disadvantageous.

It was the problem of the present invention to provide a barrier coating for flexible packaging, and flexible packagings comprising such a barrier coating, that has improved recyclability than a PE film, but provides for the required barrier properties against grease, water, or moisture vapor, while being economically favorable.

The above problem has been solved by the present invention.

In detail, the present invention is related to a composition for preparing a barrier coating, comprising

- a binder component comprising a non-cross-linked soft resin and a cross-linked soft resin,
- shellac,
- a wetting agent selected from the group consisting of a fatty acid and a fatty acid ester,
- water,
- optional additives.

It has been found that a barrier coating made from the above composition provides for the required barrier properties and has an improved recyclability over the standard PE film solution in the field.

In particular, the combination of the above two soft resins with shellac and a fatty acid and a fatty acid ester as a wetting agent provides for the required barrier properties, while avoiding the use of a high amount of shellac. Preferably, the amount of shellac in the barrier coating composition of the present invention is in the range from 1-5 wt.-%, preferably 1.5-4.5 wt.- %, more preferably 2-4 wt.-%, based on the weight of the entire composition. This makes the compositions of the present invention much less expensive.

Shellac is a naturally occurring thermoplastic obtained from secretions of the female lac bug. Shellac is available commercially in four different grades, orange shellac, dewaxed orange shellac, regular bleached shellac ("waxy white shellac" in Europe) and refined bleached shellac. Any grade of shellac is useful for carrying out this invention.

In the barrier coating of the present invention, shellac enhances barrier properties and film forming.

According to the present invention, the composition for preparing a barrier coating comprises a binder component comprising a non-cross-linked soft resin and a cross-linked soft resin.

According to the present invention, a soft resin is a polymer that has a glass transition temperature (Tg) of less than 20°C under ambient conditions.

The combination of two different soft resins provides the barrier coating of the present invention with different properties.

The first component is a non-cross-linked soft resin. Said resin is very tacky and provides the barrier coating of the present invention with good adhesion properties and good barrier properties. Preferably, said non-cross-linked soft resin is an acrylic soft resin. As an example, acrylic copolymer resins such as styrene-acrylic copolymer resins may be mentioned.

Preferably, said non-cross-linked soft resin has a glass transition temperature (Tg) under ambient conditions that is higher than the glass transition temperature (Tg) of the second binder component discussed below, i.e. the cross-linked soft resin. According to a preferred embodiment of the present invention, said non-cross-linked soft resin has a glass transition temperature (Tg) under ambient conditions in the range from 0° to less than 20°C, preferably in the range from 0° to 10°C.

Preferably, said non-cross-linked soft resin is used in the form of an aqueous dispersion or emulsion.

The second component is a cross-linked soft resin. According to a preferred embodiment of the present invention, it is a self-cross-linked resin. Said resin is non-tacky and provides for good film forming properties of the composition. Said resin assists in the formation of a homogeneous film.

Preferably, said cross-linked soft resin is an acrylic soft resin. As an example, acrylic copolymer resins may be mentioned.

Preferably, said cross-linked soft resin has a glass transition temperature (Tg) under ambient conditions that is lower than the glass transition temperature (Tg) of the first binder component discussed below, i.e. the non-cross-linked soft resin. According to a preferred embodiment of the present invention, said crosslinked soft resin has a glass transition temperature (Tg) under ambient conditions in the range from 0° to -50°C, preferably in the range from -10° to -40°C.^

Preferably, said cross-linked soft resin is used in the form of an aqueous dispersion or emulsion.

According to the present invention, soft resins are used as binder components. These resins provide for the required flexibility of flexible packagings.

According to the present invention, the term "flexible packaging" relates to packagings having a polymer film as a substrate, as well as to packagings having a paper or board as a substrate.

According to a preferred embodiment of the present invention, the binder component comprises an acrylic non-cross-linked soft resin and a cross-linked acrylic soft resin in a total amount from 50-80 wt.-%, preferably 60-75 wt.-%, based on the weight of the entire composition.

According to a further preferred embodiment of the present invention, the binder component comprises an acrylic non-cross-linked soft resin and a cross-linked acrylic soft resin in a ratio from 1:10 to 5:1, preferably in a ratio from 1:6 to 2:1.

Optionally, the composition of the present invention may comprise additional binder components for obtaining specifically desired properties in minor amounts of less than 10 wt.-%, preferably less than 5 wt.-%, based on the weight of the entire composition. Any binder components typically used in flexible packaging coating or ink compositions may be used. Examples are nitrocellulose, polyesters, ketonic resins, maleic resins or polyurethanes.

As already discussed above, the barrier coating composition of the present invention comprises shellac. According to the present invention, it is possible to limit the amount of shellac to be used in that composition to a little amount. Preferably, the amount of shellac in the barrier coating composition of the present invention is in the range from 1-5 wt.-%, preferably 1.5-4.5 wt.-%, more preferably 2-4 wt.-%, based on the weight of the entire composition. This makes the compositions of the present invention much less expensive.

Furthermore, the barrier coating composition of the present invention comprises a wetting agent selected from the group consisting of a fatty acid and a fatty acid ester. Preferably, said wetting agent is siloxane-free. Preferably, said wetting agent is completely based on naturally occurring components, i.e. it is derived from natural sources such as vegetable oils, for example sesame oil. Fatty acids derived from such natural oils may be esterified by known standard methods with naturally occurring alcohols, such as methanol or ethanol.

According to the present invention, any fatty acid and a fatty acid ester that provides for wetting properties may be used. Non-ionic siloxane-free fatty acid esters are preferred. Preferably, said wetting agent has a HLB value in the range from 7 to 9, more preferably 8.

The above wetting agent improves significantly the water resistance of a barrier coating made therefrom, since it has the effect of closing the surface of the coating.

According to a preferred embodiment of the present invention, wetting agent selected from the group consisting of a fatty acid or fatty acid ester is present in a total amount from 2-5 wt.-%, preferably 2-4 wt.-%, more preferably 2-3 wt.-%, based on the weight of the entire composition.

The barrier coating composition of the present invention is water-based. Preferably, the barrier coating composition of the present invention comprises water in an amount in the range from 3-60 wt.-%, preferably 5-50 wt.-%, based on the weight of the entire composition. This includes both water that is present in any aqueous dispersion or emulsion of any of the components of the composition, preferably the binder components, as well as water that is added separately to the composition. According to a preferred embodiment of the present invention, the amount of water that is added separately to the composition is in the range from 1-10 wt.-%, preferably 3-7 wt.-%, based on the weight of the entire composition.

The barrier coating composition of the present invention may further comprise additional additives. Such additives are additives conventionally used in compositions for coating and ink layers of flexible packagings.

For example, the barrier coating composition of the present invention may comprise one or more solvents other than the water discussed above. The solvent is preferably an organic solvent. Any organic solvent that is conventionally used in a coating or printing inks composition may be used. Examples are esters such as ethyl acetate, n-propyl acetate, isopropyl acetate, or neopentyl acetate, or alcohols such as ethanol, n-propanol, isopropanol, or butane diol. Preferably, the barrier coating composition of the present invention comprises 1 to 10 wt.-%, more preferably 3 to 7 wt.-%, based on the weight of the entire barrier coating composition, of said at least one solvent. Preferably, a solvent approved for direct food contact is used, for example isopropanol.

Furthermore, the barrier coating composition of the present invention may comprise at least one wax. Any wax that is conventionally used in a coating or printing inks composition may be used. Examples are polyethylene wax or paraffin wax. Preferably, the barrier coating composition of the present invention comprises 1 to 20 wt.-%, more preferably 5 to 15 wt.-%, based on the weight of the entire barrier coating composition, of said at least one wax. Preferably, a wax approved for direct food contact is used, such as the polyethylene wax or paraffin wax mentioned above.

Furthermore, the barrier coating composition of the present invention may comprise at least one pH adjusting agent. Any pH adjusting agent that is conventionally used in a coating or printing inks composition may be used. Examples are conventional acids or bases, preferably weak acids or bases. Examples are acetic acid, citric acid, sodium hydrogen carbonate or ammonia. Preferably, the barrier coating composition of the present invention comprises 0.1 to 5 wt.-%, more preferably 0.2 to 1 wt.- %, based on the weight of the entire barrier coating composition, of said at least one pH adjusting agent. Preferably, a pH adjusting agent approved for direct food contact is used, such as ammonia.

Furthermore, the barrier coating composition of the present invention may comprise at least one anti-foaming agent. Any anti-foaming agent that is conventionally used in a coating or printing inks composition may be used, such as silicone anti-foaming agents. Examples are BYK-044 or Spactive GA 5700. Preferably, the barrier coating composition of the present invention comprises 0.1 to 2 wt.-%, more preferably 0.2 to 1.5 wt.-%, based on the weight of the entire barrier coating composition, of said at least one anti-foaming agent.

Furthermore, the barrier coating composition of the present invention may comprise at least one biocide. Any biocide that is conventionally used in a coating or printing inks composition may be used. Preferably, the barrier coating composition of the present invention comprises 0.01 to 1 wt.-%, more preferably 0.1 to 0.5 wt.-%, based on the weight of the entire barrier coating composition, of said at least one biocide.

Furthermore, the barrier coating composition of the present invention may comprise at least one additional wetting agent different from the above wetting agent (selected from a fatty acid or fatty acid ester). Any wetting agent that is conventionally used in a coating or printing inks composition may be used, such as silicone-based wetting agents. Preferably, the barrier coating composition of the present invention comprises 0.01 to 1 wt.-%, more preferably 0.1 to 0.5 wt.-%, based on the weight of the entire barrier coating composition, of said at least one additional wetting agent.

According to a preferred embodiment of the present invention, the barrier coating composition of the present invention has a solids content in the range from 35-60 wt.-%, preferably 40-50 wt.-%, based on the weight of the entire composition.

In order to optimize the barrier properties, it is preferred to apply barrier coatings with the highest solid content possible, which means applying as little dilution as possible. The dilution has an impact on the drying speed. A too diluted coating has a tendency to go into the paper instead of staying at the surface.

The barrier coating composition of the present invention may be prepared by conventional methods, typically by mixing the components under suitable conditions, for example stirring at ambient temperature.

The barrier coating composition of the present invention may be used for manufacturing a barrier coating of a coated article.

Thus, the present invention is also related to a coated article, comprising a substrate and a barrier coating prepared from a composition described herein above.

The barrier coating composition of the present invention is especially suitable to be used for a substrate that is selected from the group consisting of paper and board. According to the present invention, any paper or board that is used as substrate for flexible packaging can be used.

As described above, in order to optimize the barrier properties, it is preferred to apply barrier coatings with the highest solid content possible, which means applying as little dilution as possible. Thus, according to a preferred embodiment of the present invention, for an essentially closed coated substrate the barrier coating has a dry coating weight in the range from 1 g to 5 g, preferably 2 g to 4 g, more preferably 2.5 g to 3 g. This is about is 70-80% lower compared to the coating weight of a conventional PE barrier layer. It should be noted, however, that the coating weight to be applied can significantly vary depending on the substrate, the quality of the substrate (porosity) and the coating technique.

According to a preferred embodiment of the present invention, the coated article may be a laminate. As used herein, the term "laminate" refers to a product that consists of a stack of layers, wherein one layer (an outermost layer or a core layer) is defined as substrate or substrate layer. For example, the substrate layer may be paper or board. A laminate may also preferably comprise more than one of those substrate layers, most preferably as outermost layers, and in between these substrate layers there may be provided a printed layer or several printed layers. These intermediate printed layers are protected from environmental influences.

One of the layers of the laminate is a barrier coating according to the present invention applied to at least one surface of one of said substrate layers.

In such a laminate, the one or more printed layers are typically connected to a substrate layer via a primer layer and/or an adhesive layer. As opposed to overprint varnish layers which are applied onto the surface of a substrate layer, a primer layer and/or an adhesive layer in a laminate has to meet specific requirements with respect to adhesion, reduced brittleness (i.e. increased flexibility) and especially has to achieve a high bond strength value.

The terms "primer composition" and "primer layer" are known in the art and refer to a composition or layer made therefrom which is applied onto a surface of a substrate in order to provide said surface with the required properties for applying a printing layer thereupon. These required properties comprise, for example, good adhesion properties, so that the printing ink layer applied thereupon does not detach during normal operation conditions. Primer layers are known in the art (e.g. WO 2021/165081 A1).

Adhesive layers are known in the art. For the purposes of the present invention, any adhesive layer conventionally used in laminates may be employed. As an example, polyurethanes which are used in combination with hardeners may be mentioned. Solvent-based, solvent-free and water-based polyurethanes can be used. An example of a suitable adhesive is a typical solventbased 2K adhesive like Adcote 811H, preferably in combination with a typical hardener like 9L10 (both raw materials are commercially available from Rohm & Haas).

The ink layer(s) applied onto the primer layer may be made from any ink conventionally used in flexible packaging applications. Such an ink can be applied on the substrate by any standard technique, preferably by flexographic or gravure printing.

Gravure and flexography are the major printing processes for printing packing materials. These processes can be used for printing a large variety of substrates, such as paper, cardboard, or plastic substrates. The gravure and flexographic printing processes are well-known. Reference may be made, for example, to Leach/Pierce (Eds.), The printing ink manual, Blueprint, London, 5th ed. 1993, p, 33-53. Also the characteristics of gravure and flexographic inks are known to the skilled man. Reference may be made, for example, to Leach/Pierce (Eds.), The printing ink manual, Blueprint, London, 5th ed. 1993, p, 473-598. The respective content of those chapters is incorporated herein by reference.

According to a preferred embodiment of the present invention, the coated article is a flexible packaging, for example cold cups for dairy and ice cream, industrial sacks (pet food sacks, cement sacks), deli wraps, meat trays, fish trays, pizza boxes, sandwich wraps, bakery bags, clam shells and vegetables trays.

Many articles such as food articles are stored in flexible packagings, i.e. packagings which are made of a material which shows some flexibility and can thus undergo certain modifications of its shape.

Flexible packagings are widely used in areas like food packaging (e.g., retortable bags, frozen food packaging, refrigerated food packaging, shelf stable food packaging, dry goods packaging, liquid food packaging, fast food wrappers and bags), pharmaceutical packaging (e.g., primary packaging, secondary packaging, booklets and instructions), personal hygiene packaging (e.g. soap packaging, hair care packaging, baby care packaging, feminine care packaging, male care packaging), home care packaging (e.g. detergent packaging, cleaner packaging), agricultural packaging (e.g., herbicide packaging, pest control packaging, fertilizer bags), industrial packaging (e.g. shopping bags, construction wrappers and bags), and pet care packaging (e.g., pet food bags, pet medical packaging, pet hygiene packaging). Flexible packagings are usually prepared by applying a printed layer, preferably by flexographic or gravure printing, onto one side of a substrate, in order to provide the packaging, label or shrink sleeve with information, design or pictures. This and further conversion to a packaging structure is known in the art.

According to another embodiment of the present invention, the coated article is an article comprising the barrier coating of the present invention in the form of an overprint varnish (OVP).

In said embodiment, the same substrate, primer layer and printing ink layer(s) discussed above for the laminate can be used.

Preferably, on at least one, preferably one surface of said substrate, a primer layer is applied. The primer layer can be applied onto the substrate by any conventional coating technique, preferably by flexographic or gravure printing. Furthermore, a printing ink layer may be applied on a side of said primer layer that is not in contact with said substrate. It is also possible to provide more than one printing ink layer onto the primer layer.

According to said preferred embodiment of the present invention, the barrier coating composition is applied as an overprint varnish onto the printing ink layer in order to protect and shield the ink layer from the environment. The resulting coated article thus preferably comprises a substrate selected from the group consisting of paper and board, a primer layer applied onto at least one surface of said substrate, at least one printing ink layer applied onto said primer layer, and the barrier coating according to the present invention applied onto said printing ink layer.

Alternatively, in an embodiment where no printing ink layer is provided, the the barrier coating can be provided as overprint varnish layer over said primer layer.

According to another preferred embodiment of the present invention, the barrier coating of the present invention can be used as coating in the paper making process. The paper making process is known to a skilled person.

The barrier coating according to the present invention may be used for direct and indirect food contact applications.

In a direct food contact application, the barrier coating comes into direct contact with food to be provided in said flexible packaging comprising said barrier coating. In such an embodiment, the barrier coating is provided on the inner surface of the flexible packaging that is intended for contact with food.

In an indirect food contact application, the barrier coating does not come into direct contact with food to be provided in said flexible packaging comprising said barrier coating. In such an embodiment, the barrier coating is provided on the outer surface of the flexible packaging that is not intended for contact with food.

For both direct and indirect food contact applications, the main composition of the barrier coating composition of the present invention is the same. However, for a direct food contact application, only such components may be used that are approved for direct contact, or the amount of components in the composition may be modified. For example, an organic solvent should be used for direct food contact application that is approved for this.

The barrier coating composition of the present invention can be applied by known methods. Thus, the present invention is also related to a process for preparing a coated article as described herein above, comprising the step of applying a composition as described herein above by a printing or coating technique selected from the group consisting of roller coating, rod coating, blade coating, curtain coating, size press coating, flexographic printing, and gravure printing.

As described above, the barrier coating composition may be applied directly onto a substrate, onto a primer layer, or onto a printing ink layer.

The above application methods are known in the art.

After application, the coating may be dried by conventional methods such as with an IR (infrared) drier or with hot air, so as to remove all volatile components such as solvents.

The coated article of the present invention has very good barrier properties against grease, water, or moisture vapor.

Preferably, the coated article of the present invention has a water absorption of less than 5 $g/m^2$, an oil absorption of less than 5 $g/m^2$, measured according to the Cobb test (ISO 535), and a Moisture Vapour Transmission Rate (MVTR) of less than 50 $g/m^2/24$ h.

Water absorption may be tested according to the Cobb test. Briefly, with said test the absorbing capacity of a sample is determined and expressed in $g/m^2$.

The test is performed not earlier than 24h after printing. The test sample is weighed before the test (Wi), then put into a standard Cobb device, with the coated side on top, and a ring is laid onto the sample and fixed. A given quantity of water, depending of the ring diameter S, is poured over the printed substrate (100g for S=100 mm, 50g for S=50 mm and 25g for S= 25 mm). After a predetermined time has passed, the water is removed, the sample is dried and weighed again (Wf). The difference determines the quantity of water absorbed by the sample. Then the value per $m^2$ is calculated.

For instance, for the medium cylinder, the COBB value is obtained as follows : (Wf-Wi) x area within ring.

The Moisture Vapour Transmission Rate (MVTR) can be measured as follows by a test that permits to determine the capacity of a coating to have a barrier effect to water vapor by measuring the water absorption of dehydrated silica gel through a coated substrate. The test is performed not earlier than 24h after printing. For each sample to be tested, a disc corresponding to the opening diameter of a glass jar in which the test is performed, is cut from the sample. Each jar is weighed (with 20g silica gel) on the scale, and the initial weight (Wi) is noted. The jar is put in a moisture chamber for 24 h, wherein the temperature and the relative humidity conditions are set to predetermined values.

At the end of the test, the jar is weighed again, and the final weight (Wf) is noted. The MVTR value is calculated as follows:

$$(Wf - Wi) \ / \ Jar \ opening \ surface.$$

The grease resistance of a coating is evaluated (TAPPI TEST T559, minimum 24h after printing) by using some solutions containing castor oil, heptane and toluene, labelled from 1 to 12 (1= bad resistance, 12= perfect resistance). The higher the number, the higher the percentages of toluene and heptane in the solution (more aggressive for the coating). The result is given by the last solution that can be used without any degradation of the coating.

The present invention will be described below in more detail with reference to non-limiting examples.

Example 1

A barrier coating composition was prepared by combining and mixing the components set forth below in table 1.

Table 1

| Component | Amount (wt.-%) |
|---|---|
| emulsion of non-crosslinked soft acrylic resin (Tg 5°C) | 41,100 |
| emulsion of crosslinked soft acrylic resin (Tg -35°C) | 31,800 |

(continued)

| Component | Amount (wt.-%) |
|---|---|
| Wetting agent (fatty acid ester, 100% natural) | 2,500 |
| Shellac | 3,000 |
| Water | 3,510 |
| paraffin wax | 6, 000 |
| HDPE wax | 6, 000 |
| Ammonia | 0,500 |
| Butanediol | 3,000 |
| Isopropanol | 2,000 |
| Biocide | 0,150 |
| Anti-foaming agents | 0,140 |
| Additive - wetting agent | 0,300 |

The resulting composition had a solids content of 45%, and a viscosity of 30-40 s (DIN4).

Onto a paper substrate (coated cup substrate of 200 gsm), the composition of table 1 was applied by a hand proofer with anilox roller to reproduce flexographic printing so as to achieve an essentially closed coated surface. The applied coating was dried for 24 h at room temperature. A dry coating weight of 3 g was obtained.

The resulting barrier coating had a water absorption of 2 $g/m^2$, measured according to the Cobb test described above for 5 min, a grease resistance of less than 5 $g/m^2$, measured according to the TAPPI TEST T559 described above, and a Moisture Vapour Transmission Rate (MVTR) of less than 50 $g/m^2/24$ h, measured as described above.

The resulting barrier coating was suitable for indirect food contact applications, since some additives were not approved for direct food contact.

Example 2

A barrier coating composition was prepared by combining and mixing the components set forth below in table 2.

Table 2

| Component | Amount (wt.-%) |
|---|---|
| emulsion of non-crosslinked soft acrylic resin (Tg 5°C) | 11,000 |
| emulsion of crosslinked soft acrylic resin (Tg -35°C) | 59,900 |
| Wetting agent (fatty acid ester, 100% natural) | 2,500 |
| Shellac | 3,000 |
| Water | 5,750 |
| paraffin wax | 6, 000 |
| HDPE wax | 6, 000 |
| Ammonia | 0,300 |
| Isopropanol | 5,000 |
| Biocide | 0,150 |
| Anti-foaming agent | 0,100 |
| Additive - wetting agent | 0,300 |

The resulting composition had a solids content of 44%, and a viscosity of 30-40 s (DIN4).

Onto a paper substrate (coated cup substrate of 200 gsm), the composition of table 2 was applied by a hand proofer with anilox roller to reproduce flexographic printing so as to achieve an essentially closed coated surface. The applied coating was dried for 24 h at room temperature. A dry coating weight of 3 g was obtained.

The resulting barrier coating had a water absorption of 2 g/m², measured according to the Cobb test described above for 5 min, a grease resistance of less than 5 g/m², measured according to the TAPPI TEST T559 described above, and a Moisture Vapour Transmission Rate (MVTR) of less than 50 g/m²/24 h, measured as described above.

The resulting barrier coating was suitable for direct food contact applications, since all additives were approved for direct food contact.

**Claims**

1. Composition for preparing a barrier coating, comprising

   - a binder component comprising a non-cross-linked soft resin and a cross-linked soft resin,
   - shellac,
   - a wetting agent selected from the group consisting of a fatty acid and a fatty acid ester,
   - water,
   - optional additives.

2. Composition according to claim 1, **characterized in that** the binder component comprises an acrylic non-cross-linked soft resin and a cross-linked acrylic soft resin, preferably in a total amount from 50-80 wt.-%, preferably 60-75 wt.-%, based on the weight of the entire composition.

3. Composition according to claim 1 or 2, **characterized in that** the fatty acid or fatty acid ester is present in a total amount from 2-5 wt.-%, preferably 2-4 wt.-%, more preferably 2-3 wt.-%, based on the weight of the entire composition.

4. Composition according to any of the preceding claims, **characterized in that** the amount of shellac is in the range from 1-5 wt.-%, preferably 1.5-4.5 wt.-%, more preferably 2-4 wt.-%, based on the weight of the entire composition.

5. Composition according to any of the preceding claims, **characterized in that** the composition comprises a wax, preferably a combination of a paraffin wax and a polyethylene wax.

6. Composition according to any of the preceding claims, **characterized in that** the composition comprises additives selected form the group consisting of an anti-foaming agent, an organic solvent, a pH-adjusting agent, and a biocide.

7. Composition according to any of the preceding claims, **characterized in that** the composition has a solids content in the range from 35-60 wt.-%, preferably 40-50 wt.-%, based on the weight of the entire composition.

8. A coated article, comprising a substrate and a barrier coating prepared from a composition according to any of claims 1 to 7.

9. Coated article according to claim 8, **characterized in that** the substrate is selected from the group consisting of paper and board.

10. Coated article according to claim 8 and 9, **characterized in that** the barrier coating has a dry coating weight in the range from 1 g to 5 g, preferably 2 g to 4 g, more preferably 2.5 g to 3 g.

11. Coated article according to any of claims 8 to 10, **characterized in that** the barrier coating is provided as overprint varnish layer over at least one layer that is provided on a surface of the substrate, wherein said layer is selected from the group consisting of an ink layer and a primer layer.

12. Coated article according to any of claims 8 to 11, **characterized in that** the coated article has a water absorption of less than 5 g/m², a grease resistance of less than 5 g/m², measured according to the Cobb test (ISO 535), and a Moisture Vapour Transmission Rate (MVTR) of less than 50 g/m²/24 h.

13. Coated article according to any of claims 8 to 12, **characterized in that** the coated article is a flexible packaging.

14. Coated article according to claim 13, **characterized in that** the barrier coating is provided on the inner surface of the flexible packaging that is intended for contact with food.

15. A process for preparing a coated article according to any of claims 8 to 14, comprising the step of applying a composition according to any of claims 1 to 7 by a printing or coating technique selected from the group consisting of roller coating, rod coating, blade coating, curtain coating, size press coating, flexographic printing, and gravure printing.

Europäisches
Patentamt

European
Patent Office

Office européen
des brevets

# EUROPEAN SEARCH REPORT

Application Number

EP 21 21 2740

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2018/081764 A1 (SUN CHEMICAL CORP [US]) 3 May 2018 (2018-05-03) * the whole document * * paragraphs [0002], [0014], [0052] – [0056], [0067], [0068], [0071] – [0073], [0074]; claims 1, 11, 15; examples 1-3; tables 3, 4 * | 1-15 | INV.<br>C09D5/02<br>C09D7/63<br>C09D7/65<br>C09D11/107<br>C09D133/00 |
| Y | US 2014/186644 A1 (DELLINGER DAVID A [US] ET AL) 3 July 2014 (2014-07-03) * the whole document * * claims 1, 5, 7; example 14 * | 1-15 | |
| Y | US 2012/207887 A1 (BATTERSBY GRAHAM C [US] ET AL) 16 August 2012 (2012-08-16) * the whole document * * paragraphs [0028], [0030], [0038]; claims 1, 3; tables 1, 2 * | 1-15 | |
| Y | CN 113 444 451 A (UNIV JIANGNAN) 28 September 2021 (2021-09-28) * the whole document * * claims 1, 4, 5, 6; figure 4; examples 1, 2 * | 1-15 | TECHNICAL FIELDS SEARCHED (IPC)<br><br>C09D<br>C08F |
| Y | EP 2 940 086 A1 (SIEGWERK DRUCKFARBEN AG & CO KGAA [DE]) 4 November 2015 (2015-11-04) * the whole document * * paragraphs [0023], [0024], [0026], [0028], [0055], [0060], [0063]; claims 1, 5, 6; example 1; table 1 * | 1-15 | |
| A | US 10 392 515 B2 (PPG IND OHIO INC [US]) 27 August 2019 (2019-08-27) * the whole document * * claims 1, 2; examples * | 1-15 | |

The present search report has been drawn up for all claims

| Place of search | Date of completion of the search | Examiner |
|---|---|---|
| Munich | 13 May 2022 | Rangheard, Claudine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 2740

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2022

| Patent document cited in search report | | | Publication date | Patent family member(s) | | | Publication date |
|---|---|---|---|---|---|---|---|
| WO 2018081764 | A1 | | 03-05-2018 | BR | 112019007422 | A2 | 02-07-2019 |
| | | | | CL | 2019001157 | A1 | 19-07-2019 |
| | | | | CL | 2019003719 | A1 | 12-06-2020 |
| | | | | CN | 110073056 | A | 30-07-2019 |
| | | | | CO | 2019002561 | A2 | 29-03-2019 |
| | | | | EP | 3532677 | A1 | 04-09-2019 |
| | | | | US | 2020056052 | A1 | 20-02-2020 |
| | | | | WO | 2018081764 | A1 | 03-05-2018 |
| US 2014186644 | A1 | | 03-07-2014 | CA | 2894498 | A1 | 03-07-2014 |
| | | | | CN | 105228825 | A | 06-01-2016 |
| | | | | EP | 2938487 | A1 | 04-11-2015 |
| | | | | JP | 2016504465 | A | 12-02-2016 |
| | | | | KR | 20160019396 | A | 19-02-2016 |
| | | | | US | 2014186644 | A1 | 03-07-2014 |
| | | | | WO | 2014105641 | A1 | 03-07-2014 |
| US 2012207887 | A1 | | 16-08-2012 | AU | 2010286690 | A1 | 08-03-2012 |
| | | | | BR | 112012003769 | A2 | 12-04-2016 |
| | | | | CA | 2772305 | A1 | 03-03-2011 |
| | | | | CN | 102548753 | A | 04-07-2012 |
| | | | | EP | 2470365 | A1 | 04-07-2012 |
| | | | | ES | 2705211 | T3 | 22-03-2019 |
| | | | | HK | 1171718 | A1 | 05-04-2013 |
| | | | | IL | 218275 | A | 31-10-2016 |
| | | | | JP | 2013503089 | A | 31-01-2013 |
| | | | | JP | 2015037971 | A | 26-02-2015 |
| | | | | JP | 2017206316 | A | 24-11-2017 |
| | | | | JP | 2020001830 | A | 09-01-2020 |
| | | | | KR | 20120050496 | A | 18-05-2012 |
| | | | | NZ | 598281 | A | 24-12-2015 |
| | | | | PL | 2470365 | T3 | 31-05-2019 |
| | | | | SG | 178882 | A1 | 27-04-2012 |
| | | | | TR | 201820321 | T4 | 21-01-2019 |
| | | | | US | 2012207887 | A1 | 16-08-2012 |
| | | | | WO | 2011025858 | A1 | 03-03-2011 |
| CN 113444451 | A | | 28-09-2021 | NONE | | | |
| EP 2940086 | A1 | | 04-11-2015 | EP | 2940086 | A1 | 04-11-2015 |
| | | | | WO | 2015165553 | A1 | 05-11-2015 |
| US 10392515 | B2 | | 27-08-2019 | CN | 110997843 | A | 10-04-2020 |
| | | | | EP | 3673021 | A1 | 01-07-2020 |
| | | | | KR | 20200044888 | A | 29-04-2020 |
| | | | | US | 2019062565 | A1 | 28-02-2019 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 21 21 2740

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2022

| Patent document cited in search report | Publication date | Patent family member(s) | Publication date |
|---|---|---|---|
| | | WO 2019040928 A1 | 28-02-2019 |

EPO FORM P0459

For more details about this annex : see Official Journal of the European Patent Office, No. 12/82

page 2 of 2

**EP 4 194 515 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2470365 B1

- WO 2021165081 A1

**Non-patent literature cited in the description**

- The printing ink manual, Blueprint, London. 1993, 33-53

- The printing ink manual, Blueprint, London. 1993, 473-598